# EUROPÄISCHE PATENTSCHRIFT

(11) **EP 2 444 866 B1**
(45) Veröffentlichungstag und Bekanntmachung des Hinweises auf die Patenterteilung: **17.04.2013**
(21) Anmeldenummer: 10187981.5
(22) Anmeldetag: 19.10.2010
(51) Int. Cl.: G05B 19/409, G06F 21/00

(54) **Bedieneinrichtung zur Bedienung einer Maschine aus der Automatisierungstechnik**
Control device for operating an automated machine
Dispositif de commande destiné à la commande d'une machine issue de la technique d'automatisation

(43) Veröffentlichungstag der Anmeldung: 25.04.2012
(73) Patentinhaber: Siemens Aktiengesellschaft, 80333 München (DE)
(72) Erfinder: Frerking, Björn, 90419, Nürnberg (DE)

(56) Entgegenhaltungen:
- EP-A1- 2 226 741
- EP-A1- 2 237 121
- DE-U1-202008 000 261
- US-A1- 2008 092 245
- US-A1- 2009 249 476

## Beschreibung

Die Erfindung betrifft eine Bedieneinrichtung zur Bedienung einer Maschine aus der Automatisierungstechnik. Weiterhin betrifft die Erfindung ein Verfahren zur Erkennung der Berechtigung zur Bedienung einer Maschine aus der Automatisierungstechnik mittels einer Bedieneinrichtung.

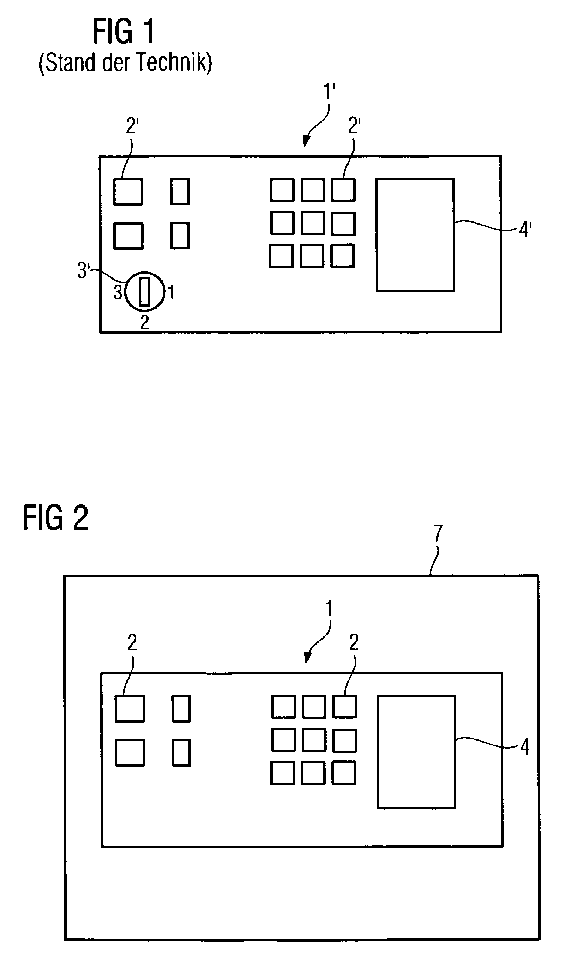

Für die Bedienrechteverwaltung und Freischaltung kommen heutzutage an Maschinen aus der Automatisierungstechnik, wie z.B. Werkzeugmaschinen, Produktionsmaschinen und/oder Roboter, verschiedene Lösungen zum Einsatz. Die generell einfachste bekannte Lösung ist die Nutzung eines Schlüsselschalters. In FIG 1 ist eine solche handelsübliche bekannte Bedieneinrichtung 1' zur Bedienung einer Maschine aus der Automatisierungstechnik dargestellt. Die Bedieneinrichtung 1' weist dabei zur Bedienung der Maschine Tasten auf, wobei der Übersichtlichkeit halber nur zwei Tasten 2' mit Bezugszeichen versehen sind. Weiterhin weist die Bedieneinrichtung 1' zur Anzeige einen konventionellen Bildschirm 4' auf. Zur Erkennung der Berechtigung zur Bedienung der Maschine weist die Bedieneinrichtung 1' einen Schlüsselschalter 3' auf, der in Abhängigkeit von einem konventionellen mechanischen Schlüssel, welcher in den Schlüsselschalter 3' eingeführt wird und in z.B. maximal drei verschiedene Positionen gedreht werden kann, unterschiedliche Bedienrechte freischaltet. Ein angelernter normaler Bediener besitzt z.B. nur einen Schlüssel, der ein Drehen des Schlüsselschalters 3' in Position 1 ermöglicht. Wenn der Schlüsselschalter in Position 1 gedreht ist, sind dabei nur bestimmte Bedienhandlungen zur Bedienung der Maschine, die z.B. für die rein alltägliche Fertigung notwendig sind, zulässig. Weitergehende Bedienhandlungen sind in der Position 1 nicht möglich. Ein qualifizierter Bediener, wie z.B. ein Einrichter der Maschine kann z.B. einen Schlüssel besitzen, der es ihm ermöglicht, den Schlüsselschalter in Position 2 zu drehen, wodurch weitere Bedienhandlungen zur Bedienung der Maschine, wie z.B. das Einfahren neuer Programme, von der Bedieneinrichtung zugelassen werden. Ein hochqualifizierter Bediener, wie z.B. ein Meister, kann z.B. einen Schlüssel für den Schlüsselschalter 3' besitzten, der es ihm ermöglicht, den Schlüsselschalter 3' in die Position 3 zu drehen, wodurch z.B. alle möglichen Bedienhandlungen zur Bedienung der Maschine von der Bedieneinrichtung zugelassen, d.h. freigeschaltet werden. So können z.B. in der Position 3 erweiterte Einfahrrechte freigegeben sein.

Weiterhin sind auch aufwändigere Lösungen bekannt, bei denen die Berechtigungsstufen mittels Transponder / RFID-Technologie freigeschaltet werden.

Alle diese Lösungen haben den Nachteil, dass zusätzliche Hardware benötigt wird und z.B. im Falle der Verwendung eines Schlüsselschalters, über den Schlüsselschalter Schmutz in das Innere der Bedieneinrichtung eindringen kann, was zu Fehlfunktionen der Bedieneinrichtung führen kann.

Aus der EP 2 196 881 A1 ist eine Bedieneinrichtung zur Bedienung einer Maschine aus der Automatisierungstechnik bekannt, die über einen sogenannten multi-touch-fähigen Bildschirm verfügt. Ein multi-touch-fähiger Bildschirm hat die Eigenschaft, dass er mehr als nur einen Berührpunkt z.B. eines Fingers oder eines Gegenstands mit dem Bildschirm gleichzeitig erfassen kann. Multi-touch-fähige Bildschirme sind z.B. auch vom iPhone der Firma Apple bekannt, bei dem beispielsweise mit zwei Fingern (zwei Berührpunkte) eine Zoomfunktion realisiert wird.

Das Dokument EP 2 237 121 A1 betrifft ein Bediengerät und ein Verfahren für eine industrielle Automatisierungsanordnung mit einer berührungsempfindlichen Anzeigevorrichtung zur Umsetzung von Benutzereingaben sowie mit einem zugeordneten Bedienmittel.

Die technische Aufgabe besteht in der Verhinderung von unabsichtlichen oder unautorisierten Eingaben an Bediengeräten für industrielle Automatisierungsanordnungen.

Die technische Lösung besteht darin, dass das Bedienmittel zur drahtlosen Aussendung eines Authentifizierungscodes an das Bediengerät eingerichtet ist. In einer Ausführung für erhöhte Sicherheitsansprüche ist das Bedienmittel zur Erfassung biometrischer Daten des Anwenders, insbesondere eines Fingerabdruck-Musters und zur Aussendung dieser Daten als Authentifizierungscode eingerichtet. Das Bediengerät vergleicht den empfangenen Authentifizierungscode mit zumindest einem gespeicherten Referenz-Authentifizierungscode und nach erfolgreicher Authentifizierung des Benutzers schaltet die Weiterverarbeitung der Benutzereingaben frei.

Es ist Aufgabe der Erfindung, eine einfache Erkennung der Berechtigung zur Bedienung einer Maschine aus der Automatisierungstechnik zu ermöglichen.

Diese Aufgabe wird gelöst durch eine Bedieneinrichtung zur Bedienung einer Maschine aus der Automatisierungstechnik, wobei die Bedieneinrichtung einen berührungsempfindlichen Bildschirm aufweist, wobei der Bildschirm zur gleichzeitigen Detektion der Berührungsorte von mehreren an unterschiedlichen Stellen des Bildschirms gleichzeitig stattfindenden Berührungen des Bildschirms ausgebildet ist, wobei die Bedieneinrichtung derart ausgebildet ist, dass die Bedieneinrichtung bei einem Kontakt eines Schlüssels mit dem Bildschirm, ein durch die detektierten Berührungsorte des Schlüssels mit dem Bildschirm festgelegtes geometrisches Muster mit einem abgespeicherten Sollmuster vergleicht, wobei die Bedieneinrichtung derart ausgebildet ist, dass falls die Bedieneinrichtung eine Übereinstimmung des geometrischen Musters mit dem Sollmuster erkennt, bestimmte Bedienhandlungen zur Bedienung der Maschine von der Bedieneinrichtung zugelassen werden.

Weiterhin wird diese Aufgabe gelöst durch ein Verfahren zur Erkennung der Berechtigung zur Bedienung einer Maschine aus der Automatisierungstechnik mittels einer Bedieneinrichtung, wobei die Bedieneinrichtung einen berührungsempfindlichen Bildschirm aufweist, wobei der Bildschirm zur gleichzeitigen Detektion der Berührungsorte von mehreren an unterschiedlichen Stellen des Bildschirms gleichzeitig stattfindenden Berührungen des Bildschirms ausgebildet ist, wobei bei einem Kontakt eines Schlüssels mit dem Bildschirm, ein durch die detektierten Berührungsorte des Schlüssels mit dem Bildschirm festgelegtes geometrisches Muster mit einem abgespeicherten Sollmuster verglichen wird, wobei falls eine Übereinstimmung des geometrischen Musters mit dem Sollmuster erkannt wird, bestimmte Bedienhandlungen zur Bedienung der Maschine von der Bedieneinrichtung zugelassen werden.

Vorteilhafte Ausbildungen der Erfindung ergeben sich aus den abhängigen Ansprüchen. Vorteilhafte Ausbildungen der Bedieneinrichtung ergeben sich analog zu vorteilhaften Ausbildungen des Verfahrens und umgekehrt.

Es erweist sich als vorteilhaft, wenn die Bedieneinrichtung derart ausgebildet ist, dass die Bedieneinrichtung bei einem Kontakt eines Schlüssels mit dem Bildschirm, ein durch die detektierten Berührungsorte des Schlüssels mit dem Bildschirm festgelegtes geometrisches Muster mit mehreren abgespeicherten Sollmustern vergleicht, wobei zu den Sollmustern jeweilig eine Berechtigungsstufe zugeordnet ist, wobei die Bedieneinrichtung derart ausgebildet ist, dass falls die Bedieneinrichtung eine Übereinstimmung des geometrischen Musters mit einem der Sollmuster erkennt, von der Bedieneinrichtung Bedienhandlungen zur Bedienung der Maschine, entsprechend der zu dem übereinstimmenden Sollmuster zugeordneten Berechtigungsstufe, zugelassen werden.

Insbesondere bei Werkzeugmaschinen, Produktionsmaschinen und/oder Robotern muss häufig ein Zugriffschutz realisiert sein, so dass die Anwendung der Erfindung bei diesen Maschinen besonders vorteilhaft ist. Selbstverständlich kann die Erfindung aber auch bei anderen Arten von Maschinen aus der Automatisierungstechnik eingesetzt werden.

Weiterhin ist ein Computerprogramm mit Programmcode zur Durchführung des erfindungsgemäßen Verfahrens, wenn das Computerprogramm auf einer Bedieneinrichtung zur Bedienung einer Maschine aus der Automatisierungstechnik ausgeführt wird, vorgesehen, wobei die Bedieneinrichtung einen berührungsempfindlichen Bildschirm aufweist, wobei der Bildschirm zur gleichzeitigen Detektion der Berührungsorte von mehreren an unterschiedlichen Stellen des Bildschirms gleichzeitig stattfindenden Berührungen des Bildschirms ausgebildet ist.

Ein Ausführungsbeispiel der Erfindung ist in der Zeichnung dargestellt und wird im Folgenden näher erläutert. Dabei zeigen:
- FIG 1: eine aus dem Stand der Technik bekannte Bedieneinrichtung zur Bedienung einer Maschine aus der Automatisierungstechnik in Form einer schematisierten Darstellung,
- FIG 2: eine erfindungsgemäße Bedieneinrichtung zur Bedienung einer Maschine aus der Automatisierungstechnik in Form einer schematisierten Darstellung,
- FIG 3: eine erste Ausbildung eines Schlüssels in Form einer schematisierten Darstellung,
- FIG 4: eine zweite Ausbildung eines Schlüssels in Form einer schematisierten Darstellung,
- FIG 5: eine dritte Ausbildung eines Schlüssels in Form einer schematisierten Darstellung, und
- FIG 6: eine Ermittlung eines geometrischen Musters.

In FIG 2 ist eine erfindungsgemäße Bedieneinrichtung 1 zur Bedienung einer Maschine 7 aus der Automatisierungstechnik dargestellt, wobei die Maschine 7 nur stark schematisiert in Form eines Rechtecks dargestellt ist. Die Bedieneinrichtung 1 ist dabei im Rahmen des Ausführungsbeispiels Bestandteil der Maschine 7. Zur Bedienung der Maschine 7 weist die Bedieneinrichtung Tasten auf, wobei der Übersichtlichkeit halber nur zwei Tasten 2 mit einem Bezugszeichen versehen sind. Weiterhin weist die Bedieneinrichtung 1 zur Bedienung der Maschine 7 einen so genannten multi-touch-fähigen Bildschirm 4 auf. Multi-touch-fähige Bildschirme haben gegenüber normalen berührungsempfindlichen Bildschirmen die Eigenschaft, dass sie mindestens zwei an unterschiedlichen Stellen des Bildschirms gleichzeitig stattfindende Berührungen des Bildschirms detektieren können. Eine solche Technologie ist auch unter der Bezeichnung "Multi-Point-Touch-Technologie" bekannt.

Von dem berührungsempfindlichen Bildschirm 4 sind somit die Berührungsorte von mindestens zwei an unterschiedlichen Stellen des Bildschirms gleichzeitig stattfindenden Berührungen, z.B. eines Fingers oder eines Gegenstands mit dem Bildschirm detektierbar.

Erfindungsgemäß werden die Detektionsfähigkeiten eines multi-touch-fähigen Bildschirms dazu benutzt, einen Zugriffsschutz für die Bedienung der Maschine aus der Automatisierungstechnik zu ermöglichen.

Hierzu wird von der Bedieneinrichtung 1 bei einem mechanischen Kontakt eines Schlüssels mit dem Bildschirm, d.h. genauer ausgedrückt bei einem mechanischen Kontakt eines Schlüssels mit der Bildschirmoberfläche, ein durch die vom Bildschirm detektierten Berührungsorten des Schlüssels mit dem Bildschirm festgelegtes geometrisches Muster mit einem in der Bedieneinrichtung abgespeicherten Sollmuster verglichen.

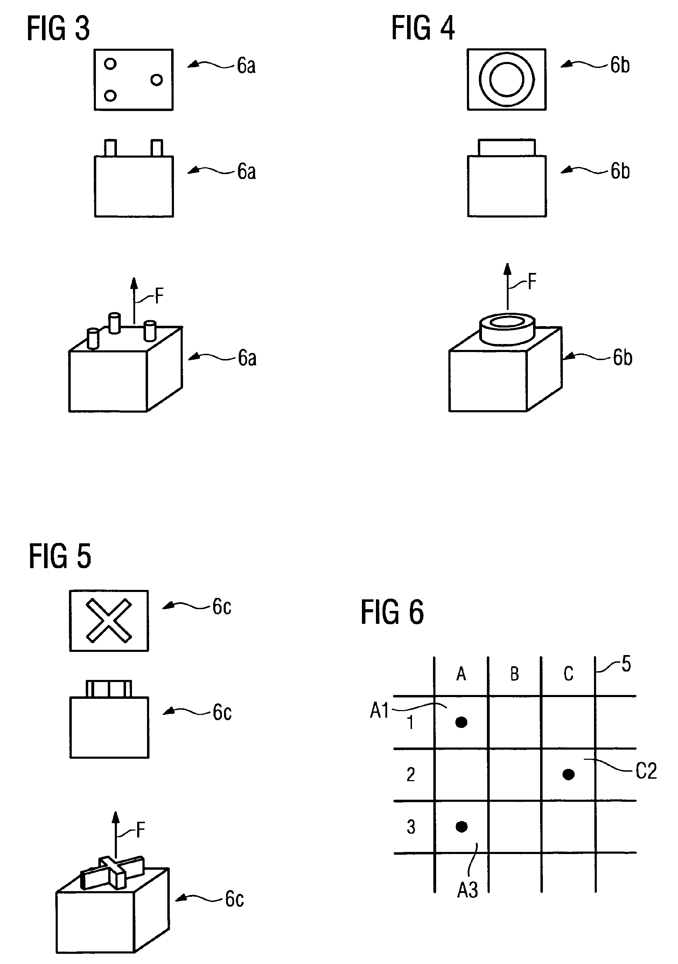

In FIG 3, FIG 4 und FIG 5 sind beispielhaft drei verschiedene Ausbildungen des Schlüssels 6a, 6b und 6c dargestellt, wobei jeweils ganz oben eine Draufsicht auf den Schlüssel, ganz unten eine dreidimensionale Ansicht des Schlüssels und in der Mitte eine Seitenansicht des jeweiligen Schlüssels dargestellt sind. Die Schlüssel 6a, 6b und 6c können dabei aus einem beliebigen festen Material sein und z.B. genau wie ein konventioneller Schlüssel am Schlüsselbund mit Hilfe z.B. eines Befestigungsrings aufbewahrt werden. Der Schlüssel weist an mindestens einer Seite eine geometrische Form auf, die von dem multi-touch-fähigen Bildschirm 4 zur Detektion verwendet wird. Es handelt sich bei den Schlüsseln sozusagen um geometrische Schlüssel. In FIG 3 ist dabei die geometrische Form, welche vom Bildschirm 4 detektiert wird, durch drei hervorstehende Stifte realisiert. Die geometrische Form des Schlüssels bildet sich als geometrisches Muster auf dem multi-touch-fähigen Bildschirm ab. In FIG 4 ist die geometrische Form durch einen hervorstehenden Ring realisiert und in FIG 5 ist die geometrische Form durch ein hervorstehendes Kreuz realisiert. Es sind beliebige geometrische Formen für die Schlüssel möglich, wobei die geometrische Form des Schlüssels vorzugsweise so ausgebildet ist, dass sie nicht durch die gleichzeitige Berührung des Bildschirms mit zwei Fingern nachgebildet werden kann, so dass das durch die detektierte Berührungsorte des Schlüssels mit dem Bildschirm festgelegte geometrische Muster nicht durch die gleichzeitige Berührung des Bildschirms mit zwei Fingern erzeugt werden kann Das geometrische Muster wird somit vorzugsweise durch mindestens drei detektierte Berührungsorte des Schlüssels mit dem Bildschirm festgelegt. Die Schlüssel liegen quasi in Form von Stempeln vor.

Zur Identifizierung des Bedieners drückt der Bediener den Schlüssel 6a, 6b oder 6c in Richtung des eingezeichneten Pfeils F mit etwas Kraft gegen den Bildschirm 4. Die geometrische Form des Schlüssels wird vom multi-touch-fähigen Bildschirm 4 detektiert.

Die vom Bildschirm 4 detektierten Berührungsorte des Schlüssels bilden ein geometrisches Muster, das von der Bedieneinrichtung 1 mit einem in der Bedieneinrichtung 1 abgespeicherten Sollmuster verglichen wird. In FIG 6 ist ein kleiner Ausschnitt eines Detektionsgitters 5 des Bildschirms 4 dargestellt, wobei die Spalten mit A, B, C und die Zeilen mit 1, 2, 3 nummeriert sind. Durch das Detektionsgitters 5 werden Felder gebildet, wobei der multi-touch-fähige Bildschirm 4 eine Berührung innerhalb eines Feldes des Detektionsgitters 5 dem entsprechenden Feld und somit einem bestimmten Ort, d.h. einer bestimmten Position auf der Bildschirmoberfläche des Bildschirms zuordnet. Je höher die Auswertegenauigkeit, d.h. je kleiner die Felder des Bildschirms sind, umso komplexer können die geometrischen Formen des geometrischen Schlüssels sein.

Im einfachsten Fall ist es möglich, dass das durch die detektierte Berührungsorte festgelegte geometrische Muster in Form der detektierten Berührungsorte vorliegt und das abgespeicherte Sollmuster in Form einer Anzahl von abgespeicherten Berührungsorten vorliegt. Das durch die detektierte Berührungsorte des Schlüssels mit dem Bildschirm festgelegte geometrische Muster wird mit dem abgespeicherten Sollmuster verglichen indem die detektierten Berührungsorte mit den abgespeicherten Berührungsorten verglichen werden. Nachteilig bei einem solchen Vorgehen ist jedoch, dass der Schlüssel zur Identifizierung immer auf dieselbe Position auf dem Bildschirm gedrückt werden muss, um eine Identifizierung zu ermöglichen. Weiterhin würde auch ein Verdrehen des Schlüssels keine Identifizierung mehr ermöglichen, da sich die Berührungsorte verändern.

Deshalb ist es von Vorteil, wenn das durch die detektierten Berührungsorte des Schlüssels mit dem Bildschirm festgelegte geometrische Muster z.B. in Form von Abständen der detektierten Berührungsorte zueinander beschrieben ist und somit in Form von Abständen der detektierten Berührungsorte zueinander vorliegt und das Sollmuster entsprechend in Form von Abständen der Berührungsorte zueinander vorliegt und abgespeichert ist. Bei dieser Auswertung wird aus den detektierten Berührungsorten von der Bedieneinrichtung das durch die detektierten Berühungsorte festgelegte geometrische Muster ermittelt und mit dem in der Bedieneinrichtung abgespeicherten Sollmuster verglichen. Das durch die detektierten Berührungsorte des Schlüssels mit dem Bildschirm festgelegte geometrische Muster wird mit dem abgespeicherten Sollmuster verglichen indem die ermittelten Abstände der detektierten Berührungsorte zueinander mit den abgespeicherten Abständen der Berührungsorte zueinander verglichen werden. Durch diese Auswertung ist es möglich, dass der Schlüssel an beliebige Positionen und beliebig verdreht an den Bildschirm 4 gedrückt werden kann und trotzdem ordnungsgemäß von der Bedieneinrichtung 1 erkannt wird.

Das durch die detektierten Berührungsorte des Schlüssels mit dem Bildschirm 4 festgelegte geometrische Muster bei Verwendung des Schlüssels 6a gemäß FIG 3 ist in FIG 6 graphisch dargestellt Bei der Verwendung des Schlüssels 6a ergibt sich somit das in FIG 6 graphisch dargestellte geometrische Muster, wobei die Berührsorte des Schlüssels 6a mit den Bildschirm 4 in FIG 6 mit dicken Punkten dargestellt sind. Der Schlüssel 6a berührt den Bildschirm 4 in den Feldern A1, A3 und C2. Das durch die detektierten Berührungsorte, d.h. den Feldern A1, A3 und C2, festgelegte geometrische Muster wird anschließend mit einem in der Bedieneinrichtung 1 abgespeicherten Sollmuster verglichen. Das geometrische Muster ist durch die geometrische Anordnung der Berühungsorte festgelegt.

Falls die Bedieneinrichtung 1 eine Übereinstimmung des geometrischen Musters mit dem Sollmuster erkennt, werden bestimmte Bedienhandlungen zur Bedienung der Maschine 7 von der Bedieneinrichtung zugelassen. Die Bedieneinrichtung 1 weist hierzu eine Vergleichseinheit auf, die den Vergleich des geometrischen Musters mit dem abgespeicherten Sollmuster vergleicht und bei Übereinstimmung des geometrischen Musters mit dem Sollmuster ein Freigabesignal erzeugt.

Bei den zuvor festgelegten Bedienhandlungen kann es sich z.B. um sicherheitsrelevante Bedienhandlungen handeln, die nur von einer autorisierten Fachkraft ausgeführt werden dürfen.

Weiterhin ist es auch möglich, dass die Bedieneinrichtung 1 das geometrische Muster mit mehreren in der Bedieneinrichtung abgespeicherten Sollmustern vergleicht, wobei den Sollmustern jeweils eine Berechtigungsstufe zugeordnet ist. Wenn die Bedieneinrichtung eine Übereinstimmung des geometrischen Musters mit einem der Sollmuster erkennt, dann werden von der Bedieneinrichtung, Bedienhandlungen zu der Bedienung der Maschine 7, entsprechend der zu dem übereinstimmenden Sollmuster zugeordneten Berechtigungsstufe, zugelassen. So kann z.B. dem Schlüssel 6a die Berechtigungsstufe "1" zugeordnet sein, dem Schlüssel 6b die Berechtigungsstufe "2" und dem Schlüssel 6c die Berechtigungsstufe "3". In der Berechtigungsstufe "1" können dabei z.B. Bedienhandlungen zugelassen sein, die in der alltäglichen Produktion durchgeführt werden müssen. So kann z.B. ein einfach angelernter Bediener den Schlüssel 6a besitzen. In der Berechtigungsstufe "2" können z.B. zusätzliche Bedienhandlungen zugelassen sein, wie z.B. das Einfahren von neuen Fertigungsprogrammen. Der zur Berechtigungsstufe 2 zugehörige Schlüssel kann somit z.B. ein Einrichter der Maschine 7 besitzen. In der Berechtigungsstufe "3" können z.B. alle möglichen Bedienhandlungen der Maschine 7 zugelassen sein. So kann die Berechtigungsstufe "3" z.B. auch erweiterte Einfahrrechte umfassen. Der Schlüssel 6c, welcher im Rahmen des Ausführungsbeispiels die Berechtigungsstufe "3" freigibt, kann z.B. von einem Meister besessen werden. Die in den Berechtigungsstufen jeweilig zulässigen Bedienhandlungen sind den Berechtigungsstufen zugeordnet und in der Bedieneinrichtung 1 abgespeichert.

Die Vergleichseinheit der Bedieneinrichtung 1 erzeugt bei Übereinstimmung des geometrischen Musters mit dem Sollmuster, entsprechend dem Sollmuster, ein Freigabesignal.

Durch den multi-touch-fähigen Bildschirm 4 wird die zweidimensionale geometrische Form eines auf den Bildschirm aufgedrückten Schlüssels detektiert. Wenn ohnehin die Bedieneinrichtung mit einem multi-touch-fähigen Bildschirm ausgerüstet ist, kann durch die Erfindung zusätzliche Hardware, wie z.B. ein mechanischer Schlüsselschalter, entfallen. Weiterhin ist die geschlossene, unbewegliche Bildschirmoberfläche eines multi-touch-fähigen Bildschirms generell unempfindlicher gegenüber Verschmutzung und Verschleiß als ein mechanisch kompliziertes Bauteil wie ein Schlüsselschalter, der zudem über seine Schlüsselöffnung immer einen Angriffspunkt für das Eindringen von schädlichen Stoffen bietet.

Es sei an dieser Stelle angemerkt, das die Hardware und/oder die Software der erfindungsgemäßen Bedieneinrichtung zur Realisierung der Funktionalitäten der Bedieneinrichtung nicht unbedingt in einem einzelnen Gehäuse angeordnet sein muss und/oder im Falle der Software in einem einzelnen Gehäuse ablaufen muss, sondern gegebenenfalls auch auf verschiedene Komponenten der Maschine 7 aus der Automatisierungstechnik, wie z.B. der Steuereinrichtung (NC, SPS) und/oder der Regeleinrichtung der Maschine aus der Automatisierungstechnik verteilt sein kann und verteilt auf diesen Komponenten ablaufen kann. Diese Komponenten der Maschine, wie z.B. die Steuereinrichtung und/oder Regeleinrichtung, sind in diesem Fall Bestandteil der erfindungsgemäßen Bedieneinrichtung.

## Patentansprüche

1. Bedieneinrichtung zur Bedienung einer Maschine (7) aus der Automatisierungstechnik, wobei die Bedieneinrichtung (1) einen berührungsempfindlichen Bildschirm (4) aufweist, wobei der Bildschirm (4) zur gleichzeitigen Detektion der Berührungsorte (A1,A3,C2) von mehreren an unterschiedlichen Stellen des Bildschirms (4) gleichzeitig stattfindenden Berührungen des Bildschirms (4) ausgebildet ist, **dadurch gekennzeichnet, dass** die Bedieneinrichtung (1) derart ausgebildet ist, dass die Bedieneinrichtung (1) bei einem Kontakt eines Schlüssels (6a,6b,6c) mit dem Bildschirm (4), ein durch die detektierten Berührungsorte (A1,A3,C2) des Schlüssels (6a,6b,6c) mit dem Bildschirm (4) festgelegtes geometrisches Muster mit einem abgespeicherten Sollmuster vergleicht, wobei die Bedieneinrichtung (1) derart ausgebildet ist, dass falls die Bedieneinrichtung (1) eine Übereinstimmung des geometrischen Musters mit dem Sollmuster erkennt, bestimmte Bedienhandlungen zur Bedienung der Maschine (7) von der Bedieneinrichtung (1) zugelassen werden.

2. Bedieneinrichtung nach Anspruch 1,
**dadurch gekennzeichnet, dass** die Bedieneinrichtung (1) derart ausgebildet ist, dass die Bedieneinrichtung (1) bei einem Kontakt eines Schlüssels (6a,6b,6c) mit dem Bildschirm, ein durch die detektierten Berührungsorte (A1,A3,C2) des Schlüssels (6a,6b,6c) mit dem Bildschirm (4) festgelegtes geometrisches Muster mit mehreren abgespeicherten Sollmustern vergleicht, wobei zu den Sollmustern jeweilig eine Berechtigungsstufe zugeordnet ist, wobei die Bedieneinrichtung derart ausgebildet ist, dass falls die Bedieneinrichtung (1) eine Übereinstimmung des geometrischen Musters mit einem der Sollmuster erkennt, von der Bedieneinrichtung (1) Bedienhandlungen zur Bedienung der Maschine (7), entsprechend der zu dem übereinstimmenden Sollmuster zugeordneten Berechtigungsstufe, zugelassen werden.

3. Bedieneinrichtung nach einem der vorhergehenden Ansprüche,
**dadurch gekennzeichnet, dass** die Maschine (7) aus der Automatisierungstechnik als Werkzeugmaschine, Produktionsmaschine und/oder als Roboter ausgebildet ist.

4. Maschine aus der Automatisierungstechnik, wobei die Maschine (7) eine Bedieneinrichtung (1) nach einem der Ansprüche 1 bis 3 aufweist.

5. Verfahren zur Erkennung der Berechtigung zur Bedienung einer Maschine (7) aus der Automatisierungstechnik mittels einer Bedieneinrichtung (1), wobei die Bedieneinrichtung (1) einen berührungsempfindlichen Bildschirm (4) aufweist, wobei der Bildschirm (4) zur gleichzeitigen Detektion der Berührungsorte (A1,A3,C2) von mehreren an unterschiedlichen Stellen des Bildschirms (4) gleichzeitig stattfindenden Berührungen des Bildschirms (4) ausgebildet ist, **dadurch gekennzeichnet, dass** bei einem Kontakt eines Schlüssels (6a,6b,6c) mit dem Bildschirm (4), ein durch die detektierten Berührungsorte (A1,A3,C2) des Schlüssels (6a,6b,6c) mit dem Bildschirm (4) festgelegtes geometrisches Muster mit einem abgespeicherten Sollmuster verglichen wird, wobei falls eine Übereinstimmung des geometrischen Musters mit dem Sollmuster erkannt wird, bestimmte Bedienhandlungen zur Bedienung der Maschine (7) von der Bedieneinrichtung (1) zugelassen werden.

6. Computerprogramm mit Programmcode zur Durchführung des Verfahrens nach Anspruch 5, wenn das Computerprogramm auf einer Bedieneinrichtung (1) zur Bedienung einer Maschine (7) aus der Automatisierungstechnik ausgeführt wird, wobei die Bedieneinrichtung (1) einen berührungsempfindlichen Bildschirm (4) aufweist, wobei der Bildschirm (4) zur gleichzeitigen Detektion der Berührungsorte (A1,A3,C2) von mehreren an unterschiedlichen Stellen des Bildschirms (4) gleichzeitig stattfindenden Berührungen des Bildschirms (4) ausgebildet ist.

## Claims

1. Operating device for operating a machine (7) in the field of automation engineering, wherein the operating device (1) features a touch-sensitive screen (4), wherein the screen (4) is designed for simultaneous detection of the touch locations (A1,A3,C2) of a plurality of simultaneous instances of the screen (4) being touched at different positions on the screen (4), **characterised in that** the operating device (1) is so designed that when a key (6a,6b,6c) comes into contact with the screen (4), the operating device (1) compares a geometric pattern that is defined by the detected touch locations (A1,A3,C2) of the key (6a,6b,6c) on the screen (4) with a stored reference pattern, wherein the operating device (1) is so designed that if the operating device (1) recognises a match between the geometric pattern and the reference pattern, specific operating actions for operating the machine (7) are enabled by the operating device (1).

2. Operating device according to claim 1,
**characterised in that** the operating device (1) is designed in such a way that when a key (6a,6b,6c) comes into contact with the screen (4), the operating device (1) compares a geometric pattern that is defined by the detected touch locations (A1,A3,C2) of the key (6a,6b,6c) on the screen (4) with a plurality of stored reference patterns, wherein an authorisation level is in each case assigned to the reference patterns, wherein the operating device is so designed that if the operating device (1) recognises a match between the geometric pattern and one of the reference patterns, operating actions for operating the machine (7) are enabled by the operating device (1) in accordance with the authorisation level that is assigned to the matching reference pattern.

3. Operating device according to one of the preceding claims,
**characterised in that** the machine (7) in the field of automation engineering takes the form of a machine tool, a production machine and/or a robot.

4. Machine in the field of automation engineering, wherein the machine (7) features an operating device (1) according to one of the claims 1 to 3.

5. Method for recognising the authorisation to operate a machine (7) in the field of automation engineering by means of an operating device (1), wherein the operating device (1) features a touch-sensitive screen (4), wherein the screen (4) is designed for simultaneous detection of the touch locations (A1,A3,C2) of a plurality of simultaneous instances of the screen (4) being touched at different positions on the screen (4), **characterised in that** when a key (6a,6b,6c) comes into contact with the screen (4), a geometric pattern that is defined by the detected touch locations (A1,A3,C2) of the key (6a,6b,6c) on the screen (4) is compared with a stored reference pattern, wherein if a match between the geometric pattern and the reference pattern is recognised, specific operating actions for operating the machine (7) are enabled by the operating device (1).

6. Computer program comprising program code for performing the method according to claim 5 when the computer program is executed on an operating device (1) for operating a machine (7) in the field of automation engineering, wherein the operating device (1) features a touch-sensitive screen (4), wherein the screen (4) is designed for simultaneous detection of the touch locations (A1,A3,C2) of a plurality of simultaneous instances of the screen (4) being touched at different positions on the screen (4).

## Revendications

1. Dispositif de commande d'une machine ( 7 ) dans la technique d'automatisation, dans lequel le dispositif ( 1 ) de commande a un écran ( 4 ) tactile, l'écran ( 4 ) étant constitué pour la détection simultanée des types ( A1, A3, C2 ) de toucher de plusieurs touchers de l'écran ( 4 ) ayant lieu simultanément en des points différents de l'écran ( 4 ), **caractérisé en ce que** le dispositif ( 1 ) de commande est tel que le dispositif ( 1 ) de commande compare, lors d'un contact d'une clé ( 6a, 6b, 6c ) avec l'écran ( 4 ), un modèle géométrique fixé par les types ( A1, A3, C2 ) de contact détectés de la clé ( 6a, 6b, 6c ) avec l'écran ( 4 ) à un modèle de consigne mémorisé, le dispositif ( 1 ) de commande étant tel que, si le dispositif ( 1 ) de commande détecte une coïncidence du modèle géométrique avec le modèle de consigne, certaines manipulations de commande de la machine ( 7 ) sont autorisées par le dispositif ( 1 ) de commande.

2. Dispositif de commande suivant la revendication 1, **caractérisé en ce que** le dispositif ( 1 ) de commande est tel que le dispositif ( 1 ) de commande compare, lors d'un contact d'une clé ( 6a, 6b, 6c ) avec l'écran, un modèle géométrique fixé par les types ( A1, A3, C2 ) de contact détectés de la clé ( 6a, 6b, 6c ) avec l'écran ( 4 ) à plusieurs modèles de consigne mémorisés, respectivement un stade d'autorisation étant associé respectivement au modèle de consigne, le dispositif de commande étant tel que, si le dispositif ( 1 ) de commande détecte une coïncidence du modèle géométrique avec l'un des modèles de consigne, des manipulations de commande de la machine ( 7 ), conformément au stade d'autorisation associé au modèle de consigne en coïncidence, sont autorisées par le dispositif ( 1 ) de commande.

3. Dispositif de commande suivant l'une des revendications précédentes,
**caractérisé en ce que** la machine de la technique d'automatisation est constituée en machine-outil, en machine de production et/ou en robot.

4. Machine de la technique d'automatisation, la machine ( 7 ) ayant un dispositif ( 1 ) de commande suivant l'une des revendications 1 à 3.

5. Procédé de détection de l'autorisation de commande d'une machine ( 7 ) de la technique d'automatisation au moyen d'un dispositif ( 1 ) de commande, le dispositif ( 1 ) de commande ayant un écran ( 4 ) tactile, l'écran ( 4 ) étant constitué pour la détection simultanée des types ( A1, A3, C2 ) de contact de plusieurs contacts de l'écran ( 4 ) ayant lieu simultanément en des points différents de l'écran ( 4 ), **caractérisé en ce que**, lors d'un contact d'une clé ( 6a, 6b, 6c ) avec l'écran ( 4 ), un modèle géométrique fixé par les types ( ail, A3, C2 ) de contact détectés de la clé ( 6a, 6b, 6c ) avec l'écran ( 4 ) est comparé à un modèle de consigne mémorisé, dans lequel, si l'on détecte une coïncidence du modèle géométrique avec le modèle de consigne, certaines manipulations de commande de la machine ( 7 ) sont autorisées par le dispositif ( 1 ) de commande.

6. Programme d'ordinateur ayant un code de programme pour effectuer le procédé suivant la revendication 5, lorsque le programme d'ordinateur est exécuté sur un dispositif ( 1 ) de commande d'une machine ( 7 ) de la technique d'automatisation, le dispositif ( 1 ) de commande ayant un écran ( 4 ) tactile, l'écran ( 4 ) étant constitué pour la détection simultanée des types ( A1, A3, C2 ) de contact de plusieurs contacts de l'écran ( 4 ) ayant lieu simultanément en des points différents de l'écran ( 4 ).
